# EUROPEAN PATENT APPLICATION

(11) **EP 4 606 768 A1**
(43) Date of publication of application: **27.08.2025**
(21) Application number: 23903819.3
(22) Date of filing: 24.11.2023
(51) Int. Cl.: C01B 33/02, C01B 32/05, H01M 4/36, H01M 4/48, H01M 4/134, H01M 10/052, H01M 4/02

(54) **METHOD FOR PREPARING NEGATIVE ELECTRODE ACTIVE MATERIAL FOR LITHIUM SECONDARY BATTERY, AND NEGATIVE ELECTRODE ACTIVE MATERIAL FOR LITHIUM SECONDARY BATTERY PREPARED THEREBY**

(30) Priority: 13.12.2022 KR 20220174210; 23.11.2023 KR 20230164782
(71) Applicant: LG Energy Solution, Ltd., Seoul 07335 (KR)
(72) Inventor: JUN, Hyun Min, Daejeon 34122 (KR); LEE, Yong Ju, Daejeon 34122 (KR); KIM, Dong Hyuk, Daejeon 34122 (KR); KIM, Do Hyeun, Daejeon 34122 (KR)
(74) Representative: Hoffmann Eitle
(86) International application number: PCT/KR2023/019130
(87) International publication number: WO 2024/128616

(57) **Abstract**

The present invention relates to a method of preparing a negative electrode active material for a lithium secondary battery, which includes a first step of forming a silicon dispersion by dispersing silicon-based particles in a solvent; a second step of adding an iron salt and tannic acid to the silicon dispersion and stirring to form a reaction layer of the iron salt and the tannic acid on surfaces of the silicon-based particles; a third step of heat treating the reaction layer of the iron salt and the tannic acid to form an amorphous carbon coating layer; and a fourth step of acid treating the amorphous carbon coating layer to form a porous amorphous carbon coating layer, and a negative electrode active material prepared thereby.

## Description

### TECHNICAL FIELD

This application claims priority from Korean Patent Application Nos. 10-2022-0174210, filed on December 13, 2022, and 10-2023-0164782, filed on November 23, 2023, the disclosures of which are incorporated by reference herein.

The present invention relates to a method of preparing a negative electrode active material for a lithium secondary battery which includes a porous amorphous carbon coating layer on its surface, a negative electrode active material prepared thereby, a negative electrode including the negative electrode active material, and a lithium secondary battery including the negative electrode.

### BACKGROUND ART

Demand for batteries as an energy source has been significantly increased as technology development and demand with respect to mobile devices have recently increased, and a variety of researches on batteries capable of meeting various needs have been carried out accordingly. Particularly, as a power source for such devices, research into lithium secondary batteries having excellent lifetime and cycle characteristics as well as high energy density has been actively conducted.

A lithium secondary battery refers to a battery which includes an electrode assembly having a positive electrode including a positive electrode active material capable of intercalating/deintercalating lithium ions, a negative electrode including a negative electrode active material capable of intercalating/deintercalating the lithium ions, and a microporous separator disposed between the positive electrode and the negative electrode, and a non-aqueous electrolyte containing the lithium ions.

A carbon-based active material and a silicon-based active material are mainly used as the negative electrode active material, wherein the silicon-based active material among them has received attention in that it has capacity about 10 times higher than that of the carbon-based active material. However, since electrical conductivity of silicon particles is very low, a large amount of a conductive agent is required in the negative electrode, and accordingly, there is a problem in that an amount of the negative electrode active material is relatively reduced to reduce energy density of the negative electrode.

In order to solve this problem, a technique of forming a carbon coating layer on a surface of the silicon particle is being used. However, in a case in which conventional pitch coating or a chemical vapor deposition (CVD) method using carbonization gas is used to introduce the carbon coating layer, since pores are not formed in the coating layer to reduce diffusivity of lithium and another problem, such as degradation of rate capability and life characteristics, eventually occurs, a solution to this problem is needed.

### DISCLOSURE OF THE INVENTION

### TECHNICAL PROBLEM

An aspect of the present invention provides a method of preparing a negative electrode active material for a lithium secondary battery which includes a porous amorphous carbon coating layer on its surface and a negative electrode active material prepared thereby.

Another aspect of the present invention provides a lithium secondary battery in which rate capability and life characteristics are improved by including the above negative electrode active material.

### TECHNICAL SOLUTION

According to an embodiment of the present invention, the present invention provides
a method of preparing a negative electrode active material for a lithium secondary battery which includes
a first step of forming a silicon dispersion by dispersing silicon-based particles in a solvent;
a second step of adding an iron salt and tannic acid to the silicon dispersion and stirring to form a reaction layer of the iron salt and the tannic acid on surfaces of the silicon-based particles;
a third step of heat treating the reaction layer of the iron salt and the tannic acid to form an amorphous carbon coating layer; and
a fourth step of acid treating the amorphous carbon coating layer to form a porous amorphous carbon coating layer.

Also, the present invention provides a negative electrode active material for a lithium secondary battery which includes silicon-based particles; and
a porous amorphous carbon coating layer formed on surfaces of the silicon-based particles,
wherein a Brunauer-Emmett-Teller (BET) specific surface area is in a range of 10 m²/g to 100 m²/g.

Furthermore, the present invention provides a negative electrode for a lithium secondary battery which includes the negative electrode active material for a lithium secondary battery.

In addition, the present invention provides a lithium secondary battery including the negative electrode for a lithium secondary battery.

### ADVANTAGEOUS EFFECTS

A method of preparing a negative electrode active material for a lithium secondary battery according to the present invention provides a method of forming a carbon coating layer on silicon-based particles in a relatively simple process in comparison to a conventional method. Specifically, it provides a method of forming a carbon coating layer in an environmentally friendly way by using tannic acid that is extracted from plants, instead of using a material which requires complex processing and is flammable, such as carbonization gas and pitch.

In addition, since the carbon coating layer formed by this method has a porous structure containing nanoscale pores, diffusion of lithium ions is easy, and thus, it may contribute to improve rate capability and life characteristics of the lithium secondary battery.

### BEST MODE FOR CARRYING OUT THE INVENTION

Hereinafter, the present invention will be described in more detail to allow for a clearer understanding of the present invention.

In general, it is known that a silicon-based negative electrode active material has capacity about 10 times higher than that of a carbon-based negative electrode active material, and accordingly, when the silicon-based negative electrode active material is used in a negative electrode, there is an advantage in that a thin film electrode with a high level of energy density may be achieved even with a thin thickness. However, since the silicon-based negative electrode active material has a large change in volume according to charge and discharge, this may lead to degradation of lifetime while a reaction continuously occurs in which a solid electrolyte interphase (SEI) film is easily broken and regenerated. Also, if the breakage and regeneration of the SEI film are repeated as described above, problems may also occur in which as a distance between active material particles is increased, electrical contact is reduced, a charge transfer path is lost, and lithium ions are isolated.

To solve these problems, a technique has been introduced to form a carbon coating layer on a surface of the silicon-based negative electrode active material particle through a method such as pitch coating and chemical vapor deposition (CVD) using carbonization gas. This method is somewhat effective in covering the entire surface of the particle, but has a disadvantage in that diffusion of the lithium ions is not easy because pores are not formed in the coating layer. In addition, since a flammable and hazardous material is used, difficulty of the process is high and it may adversely affect the environment.

Thus, in the present invention, an amorphous carbon coating layer was formed using an environmentally friendly and relatively simple method by forming a metal-phenolic network (MPN) on the surface of the silicon-based negative electrode active material particle. Particularly, rather than simply carbonizing the surface on which the MPN was formed, the present invention attempted to reduce tortuosity in the coating layer and form a nanoscale porous structure through a process of removing iron ions after carbonization.

If the surface, on which the MPN has been formed, is carbonized, it may be predicted that diffusivity of the lithium ions will be improved as the porous structure is formed, but it is the formation of an amorphous porous structure, wherein, since the tortuosity in the coating layer is increased due to macro pores, a path along which the lithium ions move is increased, and thus, an effect of improving the diffusivity of the lithium ions is reduced.

Since the present inventors paid attention to this point and removed iron ions contained in the MPN through an acid treatment after the carbonization, the tortuosity in the coating layer was reduced to shorten the movement path of the lithium ions, and eventually, the present inventors found that rate capability and life characteristics of a battery may be significantly improved.

A "BET specific surface area" in the present invention is calculated by a Brunauer-Emmett-Teller (BET) multipoint method from nitrogen adsorption isotherms in a liquid nitrogen atmosphere at 77K which are obtained using BELSORP-MAX (MicrotracBEL corp.).

"ICP analysis" in the present invention means that 0.1 g of a negative electrode active material, as an analysis target, is mixed with 2 mL of distilled water and 1 mL of concentrated nitric acid, diluted with 50 mL of ultrapure water, and then analyzed using an inductively coupled plasma optical emission spectroscopy (ICP-OES) (PERKIN-ELMER, Optima 7300DV) instrument.

The expression "particle diameter D50" in the present invention means a particle diameter corresponding to a cumulative volume of 50% in a volume cumulative particle size distribution, wherein it may be measured using a laser diffraction method. For example, after dispersing the negative electrode active material in a dispersion medium, the dispersion medium is introduced into a commercial laser diffraction particle size measurement instrument (e.g., S-3500 by Microtrac) and then irradiated with ultrasonic waves of about 28 kHz at an output of 60 W to obtain a volume cumulative particle size distribution graph, and the particle diameter D50 may be measured by a method in which a particle diameter at a cumulative volume of 50% in the obtained volume cumulative particle size distribution graph is obtained.

Hereinafter, each step will be described in more detail.

### First Step

A method of preparing a negative electrode active material for a lithium secondary battery according to an embodiment of the present invention includes a first step of forming a silicon dispersion by dispersing silicon-based particles in a solvent.

In an embodiment of the present invention, the silicon-based particle may be represented by SiOₓ (0≤x<2), but preferably, may be pure silicon that has not been subjected to an intentional oxidation process, that is, x may satisfy x=0. That is, the silicon-based particle may include some oxygen atoms or a functional group containing oxygen on its surface due to natural oxidation, but its content is different from that of SiOₓ (0<x<2) which is formed through the intentional oxidation process. Since the pure silicon particles are used, capacity of a negative electrode may be improved.

Also, the silicon-based particle may include a hydroxyl group which is inevitably generated by the natural oxidation. The hydroxyl group is disposed on the silicon-based particle and may be included in an amount of 0.1 wt% to 2 wt% based on a total weight of the silicon-based particles.

Particle diameter D50 of the silicon-based particle may be in a range of 0.3 µm to 100 µm. In a case in which the above range is satisfied, since a phenomenon of particle breakage due to a change in volume of the silicon-based particle during battery operation may be minimized and a side reaction between an electrolyte solution and the silicon-based particle may be suppressed, lifetime of the battery may be improved. Specifically, the particle diameter D50 of the silicon-based particle may be in a range of 2 µm to 7 µm. When the above range is satisfied, a porous amorphous carbon coating layer may be uniformly disposed while entirely covering the silicon-based particle.

In general, since the silicon-based particle includes a predetermined amount of the hydroxyl group on its surface due to the natural oxidation, the surface is negatively charged. Thus, it is easy to interact with positively charged iron ions.

In an embodiment of the present invention, the solvent of the first step is not particularly limited as long as it is a polar solvent in which tannic acid and iron ions may be dispersed, but is preferably a buffer solution with a pH of 7 to 12, and, in consideration of ease of pH adjustment, it is desirable that the solvent contains water. It is desirable that the pH of the solvent is closer to 12, and the pH of the solvent may specifically be in a range of 8 to 12, and may more specifically be in a range of 10 to 12. To achieve this pH, a mixed solution of distilled water and at least one buffer selected from the group consisting of sodium hydrogen phosphate, sodium dihydrogen phosphate, disodium hydrogen phosphate, sodium chloride, arginine hydrochloride, sodium citrate, trisodium citrate dihydrate, monosodium L-glutamate, sodium acetate, sodium carbonate, sodium hydrogen carbonate, sodium lactate, monopotassium phosphate, sodium hydroxide, meglumine, glycine, citric acid, and acetic acid, specifically, a mixed solution of disodium hydrogen phosphate and sodium hydroxide in distilled water may be used as the solvent of the first step. In a case in which a buffer solution, which maintains the pH close to 12 even after addition of the tannic acid and the iron salt, is used as the solvent, it is desirable because it is advantageous to form a Tris-complex by interaction of Fe³⁺ ions with phenol in the tannic acid.

Since the silicon-based particles are first dispersed before the addition of the tannic acid and the iron salt, there is an effect of ensuring uniform coating by preventing aggregation between the particles when a reaction layer is formed on the surface of the silicon-based particle in a second step to be described later. The dispersion, for example, may be performed by stirring at a speed of 1,000 rpm to 5,000 rpm, specifically 1,500 rpm to 4,000 rpm, and more specifically 2,000 rpm to 3,000 rpm at 10°C to 50°C, specifically 15°C to 40°C, and more specifically 20°C to 30° C.

### Second Step

The method of preparing a negative electrode active material for a lithium secondary battery according to the embodiment of the present invention includes a second step of adding an iron salt and tannic acid to the silicon dispersion and stirring to form a reaction layer of the iron salt and the tannic acid on surfaces of the silicon-based particles.

The reaction layer of the iron salt and the tannic acid may include a metal-phenolic network. The entire silicon-based particle may be covered with a thin thickness of the reaction layer through the metal-phenolic network.

As mentioned earlier, since the tannic acid is not only a nature-friendly material obtained from plants, but also contains many phenol groups, it easily interacts with metal ions and has a large molecular weight, and thus, it has an advantage of having a large residual carbon content even after carbonization. Also, since an iron ion among the metal ions is a trivalent ion so that it may form up to three ionic bonds with an -OH functional group, it is advantageous in that it facilitates stable coating, is relatively harmless to the human body in comparison to other ions of metals such as nickel (Ni), titanium (Ti), and tin (Sn), and is inexpensive, and thus, an iron salt was added to form the MPN in the present invention.

The iron salt is at least one selected from the group consisting of FeCl₃, FeCl₂, Fe(NO₃)₃, FeSO₄, and Fe₂(SO₄)₃, and is preferably FeCl₃. The FeCl₃ is preferable because a chlorine ion, as anion, is less likely to cause environmental pollution in comparison to anions from other iron salts.

A weight ratio of the iron salt to the tannic acid in the second step may be in a range of 1:1 to 1:50, preferably 1:1 to 1:20, and more preferably 1:1.5 to 1:3. Based on the weight ratio, that the tannic acid is at least one time the iron salt is desirable in that the tannic acid and the iron salt react sufficiently to form the network, but if an amount of the tannic acid is greater than an amount of the reactable iron salt, the coating is not properly performed and tannic acid is remained as an unreacted product in the solution, and thus, it is desirable that the amount of the tannic acid is not greater than 50 times the amount of the iron salt.

Also, a total amount of the iron salt and the tannic acid may be in a range of 0.1 wt% to 50 wt%, preferably 1 wt% to 10 wt%, and more preferably 2 wt% to 6 wt% based on a total weight of the silicon dispersion. That the total amount of the iron salt and the tannic acid is 0.1 wt% or more is desirable in terms of entirely coating the surface of the silicon, but considering that charge and discharge capacities of a silicon composite are reduced if the coating amount is excessively large, it is desirable that the total amount of the iron salt and the tannic acid is not greater than 50 wt%.

The stirring of the second step, for example, may be performed at a speed of 1,000 rpm to 5,000 rpm, specifically 1,500 rpm to 4,000 rpm, and more specifically 2,000 rpm to 3,000 rpm at 10°C to 50°C, specifically 15°C to 40°C, and more specifically 20°C to 30°C.

Furthermore, a process of extracting the silicon-based particles, in which the reaction layer of the iron salt and the tannic acid has been formed on the surfaces thereof, is performed after the stirring of the second step. The process may be performed by operating a centrifuge at 11,000 rpm for 5 minutes at room temperature to remove an unreacted solution, re-dispersing the silicon-based particles in distilled water, and then repeating the same operation three times to wash an unreacted product.

### Third Step

The method of preparing a negative electrode active material for a lithium secondary battery according to the embodiment of the present invention includes a third step of heat treating the reaction layer of the iron salt and the tannic acid to form an amorphous carbon coating layer. Specifically, the amorphous carbon coating layer may be formed by carbonization by applying heat to the silicon-based particles in which the reaction layer of the iron salt and the tannic acid has been formed on the surfaces thereof.

The heat treating of the third step may be performed in a mixed gas atmosphere of argon (Ar) and hydrogen (H₂), and may specifically be performed in a mixed gas atmosphere in which a volume ratio of Ar to H₂ is in a range of 3:1 to 10:1.

Also, the heat treating of the third step may be performed at 800°C to 1,100°C, preferably 850°C to 1,050°C, and more preferably 900°C to 1,000°C. That the heat treatment temperature is 800°C or higher is desirable because a tannic acid-iron composite in the reaction layer may be reduced to smoothly form the amorphous carbon coating, but, since a decomposition reaction of the carbon coating layer may occur at 1,100°C or higher, it is desirable that the heat treatment temperature is not greater than 1,100°C.

Furthermore, the heat treating of the third step may be performed for 1 hour to 10 hours, preferably 2 hours to 5 hours, and more preferably 2 hours to 4 hours. Since sufficient reaction time must be secured for the reduction of the tannic acid-iron composite in order to form the amorphous carbon coating layer, the heat treating must be performed for 1 hour or more, but, since the reaction is completed after a certain amount of time, it is desirable that the heat treating is performed for not greater than 10 hours.

### Fourth Step

The method of preparing a negative electrode active material for a lithium secondary battery according to the embodiment of the present invention includes a fourth step of acid treating the amorphous carbon coating layer to form a porous amorphous carbon coating layer. Iron ions may be removed by the acid treating of the fourth step.

As previously described, the amorphous porous structure is formed in the amorphous carbon coating layer formed in the third step, wherein tortuosity in the coating layer is high due to macro pores. Also, since it is in a state of containing iron ions, there is a risk of a short-circuit due to dissolution of iron when used in the battery in this state, and, since the SEI film becomes thick due to the presence of the iron ions in the electrolyte solution, there is a risk that lithium ions consumed to form the SEI may be increased to reduce the lifetime of the battery.

Thus, it is desirable that a movement path of the lithium ions is shortened by reducing the tortuosity in the coating layer by removing the iron ions in the fourth step and possibility of problems due to the dissolution of iron during subsequent battery operation is eliminated. An effect of removing other impurities may also be promoted.

The acid treating may be performed by immersing the silicon-based particles having the amorphous carbon coating layer formed thereon in an aqueous acid solution containing at least one acid selected from the group consisting of hydrochloric acid, nitric acid, and sulfuric acid at a concentration of 0.5 wt% to 30 wt%, preferably 1 wt% to 20 wt%, and more preferably 5 wt% to 10 wt%. Specifically, the immersing may be performed at room temperature (25°C) for 10 minutes to 120 minutes.

A final negative electrode active material may be obtained by dispersing the acid-treated silicon-based particles in an excessive amount of distilled water and then filtering them. The negative electrode active material thus prepared has the following characteristics.

### Negative Electrode Active Material

A negative electrode active material for a lithium secondary battery according to an embodiment of the present invention includes silicon-based particles; and a porous amorphous carbon coating layer formed on surfaces of the silicon-based particles, wherein a BET specific surface area of the negative electrode active material may be in a range of 10 m²/g to 100 m²/g, preferably 19 m²/g to 100 m²/g, more preferably 27 m²/g to 100 m²/g, and most preferably 90 m²/g to 100 m²/g.

A BET specific surface area of raw silicon particles is mostly 2 m²/g or less, and, in order to improve low electrical conductivity of a surface of the silicon particle and suppress particle breakage due to volume expansion of the silicon particle, a technique of increasing life performance by introducing a carbon coating on the silicon surface has been mainly used. However, the present inventors noted that diffusion of lithium ions was not easy for this carbon coating layer, and, in order to address this issue, they introduced a porous amorphous carbon coating layer in which a pore structure, which facilitated lithium diffusion while maintaining the advantages of the carbon coating, was formed. A degree of formation of such a pore structure (open pore) may be indirectly confirmed through the BET specific surface area. That is, the BET specific surface area may be increased to the above-described numerical range by the porous amorphous carbon coating layer. In a case in which the specific surface area is increased as described above, since the diffusivity of the lithium ion is improved, rate capability and life characteristics of the battery may be eventually improved.

Also, the negative electrode active material may have an amount of an iron element, which is measured by inductively coupled plasma (ICP) analysis, of 20 ppm to 3,000 ppm, specifically 20 ppm to 1,200 ppm, and more specifically 50 ppm to 400 ppm. 20 ppm or more of the iron element is included as the iron salt is used, but since the iron ions are removed by the acid treating as described above, an amount of the remaining iron element is not greater than 3,000 ppm.

### Negative Electrode

A negative electrode for a lithium secondary battery according to an embodiment of the present invention includes the above-described negative electrode active material. Specifically, the negative electrode includes a negative electrode active material layer, and the negative electrode active material layer includes the above-described negative electrode active material.

The negative electrode may be a free-standing negative electrode, and, in this case, the negative electrode active material layer itself corresponds to the negative electrode. Alternatively, the negative electrode may include a negative electrode current collector that supports the negative electrode active material layer.

The negative electrode current collector is not particularly limited so long as it has conductivity without causing adverse chemical changes in a battery. For example, copper; stainless steel; aluminum; nickel; titanium; fired carbon; aluminum or stainless steel that is surface-treated with one of carbon, nickel, titanium, silver, or the like; or an aluminum-cadmium alloy may be used as the negative electrode current collector. Specifically, a transition metal that adsorbs carbon well, such as copper and nickel, may be used as the negative electrode current collector.

The negative electrode active material layer may be disposed on one surface or both surfaces of the negative electrode current collector. Of course, with respect to the free-standing negative electrode, the negative electrode active material layer may become a negative electrode by itself without the negative electrode current collector.

The negative electrode active material layer may further include a carbon-based negative electrode active material, in addition to the above-described negative electrode active material. The carbon-based negative electrode active material may be at least one selected from the group consisting of artificial graphite, natural graphite, and graphitized meso-carbon microbeads.

The negative electrode active material layer may further include a binder. The binder is for securing adhesion between the silicon-based negative electrode active materials or adhesion of the silicon-based negative electrode active material to the current collector, wherein common binders used in the art may be used, and types thereof are not particularly limited. The binder, for example, may include a polyvinylidene fluoride-hexafluoropropylene copolymer (PVDF-co-HFP), polyvinyl alcohol, polyacrylonitrile, starch, hydroxypropyl cellulose, regenerated cellulose, polyvinylpyrrolidone, polytetrafluoroethylene, polyethylene, polypropylene, an ethylene-propylene-diene polymer (EPDM), a sulfonated EPDM, carboxymethyl cellulose (CMC), a styrene-butadiene rubber (SBR), a fluoro rubber, or various copolymers thereof, and any one thereof or a mixture of two or more thereof may be used. Particularly, when using an aqueous dispersion process, it is desirable that the binder is an aqueous binder such as SBR and CMC.

The negative electrode active material layer may further include a conductive agent. The conductive agent may be at least one selected from the group consisting of fullerene, carbon black, carbon nanotubes, graphene, and planar graphite.

### Lithium Secondary Battery

A lithium secondary battery according to an embodiment of the present invention includes the above-described negative electrode.

Specifically, the lithium secondary battery may include the negative electrode, a positive electrode, a separator disposed between the positive electrode and the negative electrode, and an electrolyte, wherein the negative electrode is the same as the above-described negative electrode. Since the negative electrode has been previously described in detail, the remaining configurations will be described below.

The positive electrode may include a positive electrode current collector and a positive electrode active material layer which is formed on the positive electrode current collector and includes a positive electrode active material.

In the positive electrode, the positive electrode current collector is not particularly limited as long as it has conductivity without causing adverse chemical changes in the batteries, and, for example, stainless steel; aluminum; nickel; titanium; fired carbon; or aluminum or stainless steel that is surface-treated with one of carbon, nickel, titanium, or silver may be used. Also, the positive electrode current collector may typically have a thickness of 3 µm to 500 µm and may have a surface with fine roughness to improve adhesion to the positive electrode active material. The positive electrode current collector may be used in various shapes, for example, a film, a sheet, a foil, a net, a porous body, a foam body, a non-woven fabric body, and the like.

The positive electrode active material may be a typically used positive electrode active material. Specifically, the positive electrode active material may include a layered compound, such as lithium cobalt oxide (LiCoO₂) or lithium nickel oxide (LiNiO₂), or a compound substituted with one or more transition metals; lithium iron oxides such as LiFe₃O₄; lithium manganese oxides such as Li_{1+c1}Mn_{2-c1}O₄ (0≤c1≤0.33), LiMnO₃, LiMn₂O₃, and LiMnO₂; lithium copper oxide (Li₂CuO₂); vanadium oxides such as LiV₃O₃, V₂O₅, and Cu₂V₂O₇; nickel (Ni)-site type lithium nickel oxide expressed by a chemical formula of LiNi_{1-c2}M_{c2}O₂ (where M is at least one selected from the group consisting of cobalt (Co), manganese (Mn), aluminum (Al), copper (Cu), iron (Fe), magnesium (Mg), boron (B), and gallium (Ga), and c2 satisfies 0.01≤c2≤0.3); lithium manganese composite oxide expressed by a chemical formula of LiMn_{2-c3}M_{c3}O₂ (where M is at least one selected from the group consisting of Co, Ni, Fe, chromium (Cr), zinc (Zn), and tantalum (Ta), and c3 satisfies 0.01≤c3≤0.1) or Li₂Mn₃MO₈ (where M is at least one selected from the group consisting of Fe, Co, Ni, Cu, and Zn); and LiMn₂O₄ having a part of lithium (Li) being substituted with alkaline earth metal ions, but the positive electrode active material is not limited thereto. The positive electrode may be Li-metal.

The positive electrode active material layer may include a positive electrode conductive agent and a positive electrode binder as well as the above-described positive electrode active material.

In this case, the positive electrode conductive agent is used for providing conductivity to the electrode, wherein any conductive agent may be used without particular limitation as long as it has electronic conductivity without causing adverse chemical changes in the battery. Specific examples of the positive electrode conductive agent may be graphite such as natural graphite and artificial graphite; carbon black such as acetylene black, Ketjen black, channel black, furnace black, lamp black, and thermal black; a carbon-based material such as carbon fibers; metal powder, such as copper powder, nickel powder, aluminum powder, and silver powder, or metal fibers; conductive whiskers such as zinc oxide whiskers and potassium titanate whiskers; conductive metal oxide such as titanium oxide; or conductive polymers such as polyphenylene derivatives, and one alone or a mixture of two or more thereof may be used.

Also, the positive electrode binder functions to improve binding between positive electrode active material particles and adhesion between the positive electrode active material and the positive electrode current collector. Specific examples of the positive electrode binder may be polyvinylidene fluoride (PVDF), a polyvinylidene fluoride-hexafluoropropylene copolymer (PVDF-co-HFP), polyvinyl alcohol, polyacrylonitrile, carboxymethyl cellulose (CMC), starch, hydroxypropyl cellulose, regenerated cellulose, polyvinylpyrrolidone, polytetrafluoroethylene, polyethylene, polypropylene, an ethylene-propylene-diene polymer (EPDM), a sulfonated EPDM, a styrene-butadiene rubber (SBR), a fluoro rubber, or various copolymers thereof, and one alone or a mixture of two or more thereof may be used.

The separator separates the negative electrode and the positive electrode and provides a movement path of lithium ions, wherein any separator may be used as the separator without particular limitation as long as it is typically used in a secondary battery, and particularly, a separator having high moisture-retention ability for an electrolyte as well as low resistance to the transfer of electrolyte ions may be used. Specifically, a porous polymer film, for example, a porous polymer film prepared from a polyolefin-based polymer, such as an ethylene homopolymer, a propylene homopolymer, an ethylene/butene copolymer, an ethylene/hexene copolymer, and an ethylene/methacrylate copolymer, or a laminated structure having two or more layers thereof may be used. Also, a typical porous nonwoven fabric, for example, a nonwoven fabric formed of high melting point glass fibers or polyethylene terephthalate fibers may be used. Furthermore, a coated separator including a ceramic component or a polymer component may be used to secure heat resistance or mechanical strength, and the separator having a single layer or multilayer structure may be optionally used.

The electrolyte may include an organic liquid electrolyte, an inorganic liquid electrolyte, a solid polymer electrolyte, a gel-type polymer electrolyte, a solid inorganic electrolyte, or a molten-type inorganic electrolyte which may be used in the preparation of the lithium secondary battery, but the present invention is not limited thereto.

Specifically, the electrolyte may include a non-aqueous organic solvent and a metal salt.

Examples of the non-aqueous organic solvent may be aprotic organic solvents, such as N-methyl-2-pyrrolidone, propylene carbonate, ethylene carbonate, butylene carbonate, dimethyl carbonate, diethyl carbonate, γ-butyrolactone, 1,2-dimethoxy ethane, tetrahydrofuran, 2-methyl tetrahydrofuran, dimethyl sulfoxide, 1,3-dioxolane, formamide, diemthylformamide, dioxolane, acetonitrile, nitromethane, methyl formate, methyl acetate, phosphate triester, trimethoxy methane, a dioxolane derivative, sulfolane, methyl sulfolane, 1,3-dimethyl-2-imidazolidinone, a propylene carbonate derivative, a tetrahydrofuran derivative, ether, methyl propionate, and ethyl propionate.

Particularly, ethylene carbonate and propylene carbonate, which are ring-type carbonates among the carbonate-based organic solvents, well dissociate a lithium salt in the electrolyte solution due to high dielectric constants as high-viscosity organic solvents, and thus, the ring-type carbonate may be preferably used. Since an electrolyte solution having high electrical conductivity may be prepared when the ring-type carbonate is mixed with low-viscosity, low-dielectric constant linear carbonate, such as dimethyl carbonate and diethyl carbonate, in an appropriate ratio, such a combined use may be more preferable.

A lithium salt may be used as the metal salt, and the lithium salt is a material that is readily soluble in the non-aqueous electrolyte solution, wherein, for example, at least one selected from the group consisting of F⁻, Cl⁻, I⁻, NO₃⁻, N(CN)₂⁻, BF₄⁻, ClO₄⁻, PF₆⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, CF₃CF₂SO₃-, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂) ₃C⁻, CF₃(CF₂)₇SO₃⁻, CF₃CO₂⁻, CH₃CO₂⁻, SCN⁻, and (CF₃CF₂SO₂) ₂N⁻ may be used as an anion of the lithium salt.

At least one additive, for example, a carbonate-based compound such as vinylene carbonate and difluoroethylene carbonate, pyridine, triethylphosphite, triethanolamine, cyclic ether, ethylenediamine, n-glyme, hexamethyl phosphoric triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, or aluminum trichloride, may be further included in the electrolyte in addition to the above-described electrolyte components for the purpose of improving life characteristics of the battery, preventing a decrease in battery capacity, and improving discharge capacity of the battery.

According to another embodiment of the present invention, a battery module including the secondary battery as a unit cell and a battery pack including the battery module are provided. Since the battery module and the battery pack include the secondary battery having high capacity, high rate capability, and high cycle characteristics, the battery module and the battery pack may be used as a power source of a medium and large sized device selected from the group consisting of an electric vehicle, a hybrid electric vehicle, a plug-in hybrid electric vehicle, and a power storage system.

Hereinafter, the present invention will be described in more detail, according to specific examples.

### MODE FOR CARRYING OUT THE INVENTION

### <Examples and Comparative Examples: Preparation of Negative Electrode Active Material and Negative Electrode>

### Example 1.

### (1) Preparation of Negative Electrode Active Material

A silicon dispersion was prepared by adding 2 g of silicon particles having a particle diameter D50 of 4 µm to 5 µm and a specific surface area of 1.5 m²/g into 100 mL of a buffer solution with a pH of 12 and stirring at a speed of 2,500 rpm at 25°C. A mixed solution of 10.6 g of disodium hydrogen phosphate and 3.10 g of sodium hydroxide in 1 L of distilled water was used as the buffer solution. 2 g of tannic acid and 1 g of FeCl₃ were added to the prepared silicon dispersion and stirred at a speed of 2,500 rpm at 25°C. Thereafter, the dispersion was transferred to a centrifuge and silicon-based particles were extracted by operating the centrifuge at 11,000 rpm for 5 minutes at room temperature to remove an unreacted solution, re-dispersing the silicon particles in distilled water, and then repeating the same operation three times.

After the extracted particles were heat-treated at 950°C for 3 hours in an Ar/H₂ (volume ratio = 3:1) atmosphere, iron ions were removed by an acid treatment through a process of putting the heat-treated particles in an aqueous acid solution containing hydrochloric acid at a concentration of 10 wt% and stirring at a speed of 3,000 rpm for 1 hour at 40°C.

Thereafter, a negative electrode active material was prepared by washing the acid-treated particles three times with distilled water and then drying the washed particles.

### (2) Preparation of Negative Electrode

A mixture was prepared by mixing the prepared negative electrode active material, carbon black as a conductive agent, and carboxymethylcellulose (CMC) and a styrene butadiene rubber (SBR), as a binder, at a weight ratio of 95.8:1:1.7:1.5. Thereafter, 7.8 g of distilled water was added to 5 g of the mixture and then stirred to prepare a negative electrode slurry. The negative electrode slurry was applied to a 20 µm thick copper (Cu) metal thin film, as a negative electrode current collector, and dried. In this case, a temperature of circulating air was 60°C. Subsequently, the negative electrode current collector was roll-pressed and dried in a vacuum oven at 130°C for 12 hours to prepare a negative electrode.

### Example 2.

A negative electrode was prepared in the same process as in Example 1 except that the amount of FeCl₃ was changed to 0.1 g during the preparation of the negative electrode active material.

### Example 3.

A negative electrode was prepared in the same process as in Example 1 except that the heat treatment temperature in the process of heat treating the extracted silicon-based particles was changed to 500°C during the preparation of the negative electrode active material.

### Example 4.

A negative electrode was prepared in the same process as in Example 1 except that the concentration of the hydrochloric acid in the aqueous acid solution in the process of acid treating the heat-treated particles was changed to 1 wt% during the preparation of the negative electrode active material.

### Comparative Example 1.

A negative electrode was prepared in the same process as in Example 1 except that FeCl₃ was not added to the silicon dispersion during the preparation of the negative electrode active material.

### Comparative Example 2.

A carbon coating layer was formed on the silicon-based particles through thermal decomposition of methane by performing a chemical vaporization deposition (CVD) treatment on 50 g of silicon particles having a particle diameter D50 of 4 µm to 5 µm and a specific surface area of 1.5 m²/g at 950°C for 3 hours in an Ar/CH₄ (volume ratio=3:1) mixed gas atmosphere using a tube-type electric furnace. Thereafter, a negative electrode active material was prepared by washing the silicon-based particles thus obtained three times with distilled water and drying.

A negative electrode was prepared in the same process as in Example 1 except that the negative electrode active material prepared as described above was used as a negative electrode active material.

### Comparative Example 3.

A negative electrode was prepared in the same process as in Example 1 except that the process of removing iron ions by acid treating the heat-treated particles was omitted during the preparation of the negative electrode active material.

### Comparative Example 4.

A negative electrode was prepared in the same process as in Example 1 except that NiCl₂, instead of FeCl₃, was added to the silicon dispersion during the preparation of the negative electrode active material.

### <Experimental Examples>

### Experimental Example 1: Measurement of Specific Surface Area of Negative Electrode Active Material Particles

After 3 g of each of the negative electrode active material powders prepared in Examples 1 to 4 and Comparative Examples 1 to 4 was put into BELSORP-MAX (MicrotracBEL corp.) and nitrogen adsorption isotherms were obtained in a liquid nitrogen atmosphere at 77K, a BET specific surface area was calculated using the nitrogen adsorption isotherms and listed in Table 1 below.

**[Table 1]**

| | BET specific surface area (m²/g) |
|---|---|
| Example 1 | 94.3 |
| Example 2 | 11.2 |
| Example 3 | 19.8 |
| Example 4 | 27.9 |
| Comparative Example 1 | 2.1 |
| Comparative Example 2 | 2.5 |
| Comparative Example 3 | 2.9 |
| Comparative Example 4 | 8.7 |

According to the results in Table 1, it may be confirmed that the negative electrode active materials prepared in Examples 1 to 4 had a larger specific surface area than the negative electrode active materials prepared in Comparative Examples 1 to 4. The reason for this is that, with respect to Examples 1 to 4, a coating layer containing a nanoscale porous structure was formed by carbonizing and then acid treating a surface on which a metal-phenolic network (MPN) was formed. It may be confirmed that, among them, the negative electrode active material of Example 1 had the largest specific surface area, because the formation of the coating layer was easier by including a larger amount of the iron salt than Example 2, oxygen in the tannic acid was more easily reduced due to the higher heat treatment temperature than Example 3 so that a binding force between iron ions and OH⁻ was relatively reduced to facilitate the removal of the iron ions, and the removal of the iron ions was easy due to the higher concentration of the acid than Example 4.

In contrast, with respect to Comparative Example 1, a small amount of the tannic acid was bound to a surface of the silicon particle through hydrogen bonding to slightly increase the specific surface area, but it may be confirmed that the specific surface area was much lower than those of the examples. With respect to Comparative Example 2, since the CVD method was introduced, pores were not formed in the coating layer, with respect to Comparative Example 3, the iron ion removal process was omitted, and, with respect to Comparative Example 4, since nickel was used instead of iron, it may be confirmed that it exhibited a lower specific surface area than the examples. The reason for this is that, since a Fe³⁺ ion may bind up to three -OH functional groups but a Ni²⁺ ion may bind up to two -OH functional groups, it was relatively difficult for the Ni²⁺ ions to form a composite with the tannic acid, and, accordingly, a small amount of the coating layer was formed on a surface of the silicon.

### Experimental Example 2: Measurement of Iron Content in Negative Electrode Active Material Particles

After 0.1 g of each of the negative electrode active material powders prepared in Examples 1 to 4 and Comparative Example 3 was mixed with 2 mL of distilled water and 1 mL of concentrated nitric acid and then diluted with 50 mL of ultrapure water, an iron content was confirmed using an ICP-OES (PERKIN-ELMER, Optima 7300DV) instrument and listed in Table 2 below.

**[Table 2]**

| | Iron content (ppm) |
|---|---|
| Example 1 | 132 |
| Example 2 | 92 |
| Example 3 | 359 |
| Example 4 | 487 |
| Comparative Example 3 | 5,254 |

According to the results in Table 2, when comparing the negative electrode active materials of Examples 1 to 4 and Comparative Example 3 in which the iron salt was used in the preparation process, it may be confirmed that the iron contents of Examples 1 to 4 were significantly decreased in comparison to that of Comparative Example 3 due to the acid treatment.

### Experimental Example 3: C-rate Evaluation

Secondary batteries were respectively prepared as follows by using the negative electrodes prepared in Examples 1 to 4 and Comparative Examples 1 to 4.

Li[Ni_{0.6}Mn_{0.2}Co_{0.2}]O₂ was used as a positive electrode active material. The positive electrode active material, carbon black as a conductive agent, and polyvinylidene fluoride (PVdF), as a binder, were mixed in a weight ratio of 94:4:2 in an N-methyl-2-pyrrolidone solvent to prepare a positive electrode slurry.

The positive electrode slurry prepared was applied to a 15 µm thick aluminum metal thin film, as a positive electrode current collector, and dried. In this case, a temperature of circulating air was 110°C. Subsequently, the coated and dried positive electrode current collector was roll-pressed and dried in a vacuum oven at 130°C for 2 hours to form a positive electrode active material layer.

Each of the negative electrodes of Examples 1 to 4 and Comparative Examples 1 to 4, the above-prepared positive electrode, and a porous polyethylene separator were assembled by using a stacking method, and an electrolyte solution (ethylene carbonate (EC)/ethyl methyl carbonate (EMC)=1/2 (volume ratio), lithium hexafluorophosphate (LiPF₆ 1M)) was injected into the assembled battery to prepare a secondary battery.

The prepared secondary battery was charged at 0.5 C-rate (0.5 C constant current charge, 0.05 V constant voltage charge, and 0.05 C cut off) and discharged at a specific C-rate (0.5 C, 1 C, 2 C, 5 C) (constant current discharge at the corresponding C-rate, 1.5 V cut off) to measure discharge capacity for each rate condition. The discharge capacity was calculated based on a weight of the negative electrode active material, and a capacity development ratio was calculated according to the following equation.
· Capacity development ratio (%) = {discharge capacity at the corresponding C-rate/discharge capacity at 0.5 C} × 100

The results thereof are presented in Table 3 below.

**[Table 3]**

| | 0.5C capacity development ratio (%) | 1C capacity development ratio (%) | 2C capacity development ratio (%) | 5C capacity development ratio (%) |
|---|---|---|---|---|
| Example 1 | 100 | 97 | 93 | 85 |
| Example 2 | 100 | 94 | 86 | 77 |
| Example 3 | 100 | 95 | 89 | 81 |
| Example 4 | 100 | 93 | 83 | 73 |
| Comparative Example 1 | 100 | 91 | 80 | 65 |
| Comparative Example 2 | 100 | 92 | 82 | 71 |
| Comparative Example 3 | 100 | 89 | 81 | 67 |
| Comparative Example 4 | 100 | 90 | 80 | 71 |

According to the results in Table 3, it may be confirmed that capacity development ratios of the batteries using the negative electrodes of Examples 1 to 4 were better than those of the batteries using the negative electrodes of Comparative Examples 1 to 4 for all rate conditions. Among them, it may be confirmed that the battery, in which the negative electrode of Example 1 prepared using the negative electrode active material with the largest specific surface area as described above was used, exhibited the best performance.

### Experimental Example 4: Capacity Retention Evaluation

Charge and discharge of the secondary batteries prepared in Experimental Example 1 were performed under the following conditions.
·Charging conditions: charged at a constant current of 0.5 C to 4.25 V, and then charged at 4.2 V until a current rate was 0.1 C
·Discharging conditions: discharged at a current rate of 0.5 C to 2.8 V

When charge capacity of one cycle was 100%, a ratio of discharge capacity of one cycle was listed in Table 3 below as an initial efficiency (%).

Also, when the above charging and discharging were set as one cycle, 100 cycles were performed at 25°C. Thereafter, discharge capacity (capacity retention) after 100 cycles was evaluated based on 100% of discharge capacity after 1 cycle and presented in Table 4 below.

**[Table 4]**

| | Initial efficiency (%) | Capacity retention after 100 cycles (%) |
|---|---|---|
| Example 1 | 94.5 | 89.7 |
| Example 2 | 91.2 | 85.6 |
| Example 3 | 92.1 | 87.4 |
| Example 4 | 89.9 | 83.2 |
| Comparative Example 1 | 86.3 | 77.3 |
| Comparative Example 2 | 88.1 | 79.2 |
| Comparative Example 3 | 82.3 | 63.2 |
| Comparative Example 4 | 84.2 | 68.3 |

According to the results in Table 4, it may be confirmed that the batteries using the negative electrodes of Examples 1 to 4 not only had better initial efficiency than the batteries using the negative electrodes of Comparative Examples 1 to 4, but also had improved life characteristics.

## Claims

1. A method of preparing a negative electrode active material for a lithium secondary battery, comprising:
a first step of forming a silicon dispersion by dispersing silicon-based particles in a solvent;
a second step of adding an iron salt and tannic acid to the silicon dispersion and stirring to form a reaction layer of the iron salt and the tannic acid on surfaces of the silicon-based particles;
a third step of heat treating the reaction layer of the iron salt and the tannic acid to form an amorphous carbon coating layer; and
a fourth step of acid treating the amorphous carbon coating layer to form a porous amorphous carbon coating layer.

2. The method of claim 1, wherein the reaction layer of the iron salt and the tannic acid comprises a metal-phenolic network.

3. The method of claim 1, wherein the solvent of the first step is a buffer solution with a pH of 7 to 12.

4. The method of claim 1, wherein a weight ratio of the iron salt to the tannic acid in the second step is in a range of 1:1 to 1:50.

5. The method of claim 1, wherein the heat treating of the third step is performed at 800°C to 1,100°C.

6. The method of claim 1, wherein the acid treating of the fourth step is performed by immersing the silicon-based particles having the amorphous carbon coating layer formed thereon in an aqueous acid solution containing at least one acid selected from the group consisting of hydrochloric acid, nitric acid, and sulfuric acid at a concentration of 0.5 wt% to 30 wt%.

7. The method of claim 1, wherein iron ions are removed by the acid treating of the fourth step.

8. The method of claim 1, wherein the silicon-based particle is represented by SiOₓ (0≤x<2).

9. The method of claim 1, wherein the iron salt is at least one selected from the group consisting of FeCl₃, FeCl₂, Fe(NO₃)₃, FeSO₄, and Fe₂(SO₄)₃.

10. A negative electrode active material for a lithium secondary battery, comprising:
silicon-based particles; and
a porous amorphous carbon coating layer formed on surfaces of the silicon-based particles,
wherein a BET specific surface area of the negative electrode active material is in a range of 10 m²/g to 100 m²/g.

11. The negative electrode active material for a lithium secondary battery of claim 10, wherein an amount of an iron element, which is measured by ICP analysis, is in a range of 20 ppm to 3,000 ppm.

12. A negative electrode for a lithium secondary battery, comprising the negative electrode active material of claim 10.

13. A lithium secondary battery comprising the negative electrode of claim 12.
